# EUROPEAN PATENT APPLICATION

(11) **EP 2 717 096 A1**
(43) Date of publication of application: **09.04.2014**
(21) Application number: 12792167.4
(22) Date of filing: 11.05.2012
(51) Int. Cl.: G03B 35/08, G03B 17/00, H04N 5/225, H04N 13/02

(54) **IMAGING DEVICE, IMAGING SELECTION METHOD, AND RECORDING MEDIUM**

(30) Priority: 27.05.2011 JP 2011119200
(71) Applicant: NEC CASIO Mobile Communications, Ltd., Kawasaki-shi Kanagawa 211-8666 (JP)
(72) Inventor: FUJIWARA, Nozomu, Kawasaki-shi, Kanagawa 211-8666 (JP)
(74) Representative: Vossius & Partner
(86) International application number: PCT/JP2012/062191
(87) International publication number: WO 2012/165123

(57) **Abstract**

An imaging device includes: three or more imaging means; detecting means that detects the tilt of the imaging device; and, control means that selects, based on a detection result of the detecting means, two imaging means, which are horizontally shifted from each other in a situation where the detecting means has detected the tilt, from among the three or more imaging means.

## Description

### Technical Field

The present invention relates to an imaging device, an imaging selection method and a recording medium, in particular, relates to an imaging device, an imaging selection method and a recording medium for producing stereoscopic image data.

### Background Art

Recently, 3D (3-Dimensional) images have been spreading rapidly.

In order to produce a 3D image, it is necessary to generate a right-eye image and a left-eye image using a left-eye camera and right-eye camera that are arranged horizontally apart from each other by a distance corresponding to the parallax as well to as human eyes.

In an imaging device having a left-eye camera and a right-eye camera that are arranged horizontally apart from each other by a distance corresponding to the parallax of the line of sight of human eyes, if the imaging device is inclined, for example 90 degrees, the two cameras will be displaced in the vertical direction so that a horizontal shift corresponding to parallax cannot be created, hence it is not possible to generate stereoscopic image data.

Patent Document 1 discloses a compound eye camera in which a left-eye camera and a right-eye camera can be positioned so as to be horizontally displaced by a distance corresponding to the parallax even when the camera body is inclined 90 degrees.

The compound eye camera that is described in Patent Document 1 has a revolving mechanism that turns the left-eye camera and right-eye camera about 90 degrees on their common axis. Accordingly, when an image is taken with the camera body that is tilted 90 degrees, it is possible to take an image with the left-eye camera and right-eye camera that are rotated about 90 degrees by using the revolving mechanism so that the left-eye camera and right-eye camera will be horizontally shifted by a distance corresponding to a parallax.

### Related Art Documents

### Patent Document

Patent Document 1: JP2009-177565A

### Summary of the Invention

### Problems to be solved by the Invention

The compound eye camera that is described in Patent Document 1 has a movable portion that is a revolving mechanism for rotating the left-eye camera and right-eye camera. This movable portion entails a risk, for example, that the movable portion will become unable to operate correctly due to wearout of the contact parts, causing breakdown.

Accordingly, demand has arisen for a technique that does not require a moving portion to revolve left-eye and right-eye cameras, as a method of achieving such a positional relationship that can keep the left-eye camera and the right-eye camera apart from each other by a distance corresponding to parallax even when the camera body is tilted 90 degrees.

The object of the present invention is to provide an imaging device, an imaging selection method and a recording medium that can solve the above problem.

### Means for Solving the Problems

An imaging device according to the present invention includes:
three or more imaging means;
detecting means that detects a tilt of the imaging device; and,
control means that selects, based on a detection result of the detecting means, two imaging means, which are horizontally shifted from each other in a situation where the detecting means has detected the tilt, from among the three or more imaging means.

An imaging selection method, according to the present invention, is an imaging selection method used in an imaging device including three or more imaging means, comprising:
detecting a tilt of the imaging device; and,
selecting, based on the tilt of the imaging device, two imaging means, which are horizontally shifted from each other in a situation where the tilt has been detected, from among the three or more imaging means.

A recording medium, according to the present invention, is a computer-readable recording medium storing a program that causes a computer that is connected to three or more imaging means to execute:
a detecting procedure for detecting a tilt of the imaging device; and,
a control procedure for selecting, based on the tilt of the imaging device, two imaging means, which are horizontally shifted from each other in a situation where the tilt has been detected, from among the three or more imaging means.

### Effect of the Invention

According to the present invention, it is possible to establish a positional relationship of a left-eye camera and a right-eye camera such that the cameras are horizontally apart from each other by a distance corresponding to parallax even if the imaging device is tilted 90 degrees, without requiring a movable portion that turns left-eye and right-eye cameras.

### Brief Description of the Drawings

FIG. 1 is a block diagram showing imaging device 1 of one exemplary embodiment of the present invention.
FIG. 2 is a front view of imaging device 1.
FIG. 3 is a diagram showing one example of determining information.
FIG. 4 is a flow chart for illustrating the operation of imaging device 1.
FIG. 5 is a block diagram showing an imaging device comprised of camera 11, camera 12, camera 13, tilt sensor 14 and control unit 15.
FIG. 6 is a front view of imaging device 1 to which extra camera 61 is added.
FIG. 7 is a diagram showing one example of determining information 71.

### Mode for Carrying Out the Invention

Next, one exemplary embodiment of the present invention will be described with reference to the present invention.

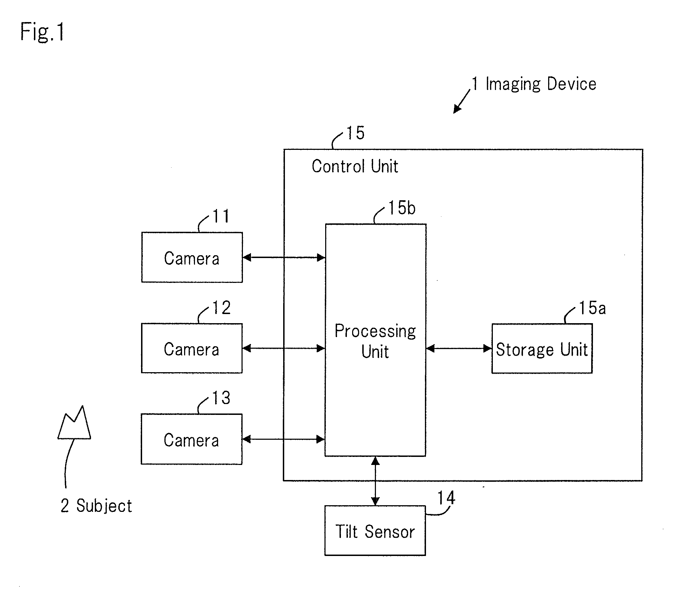

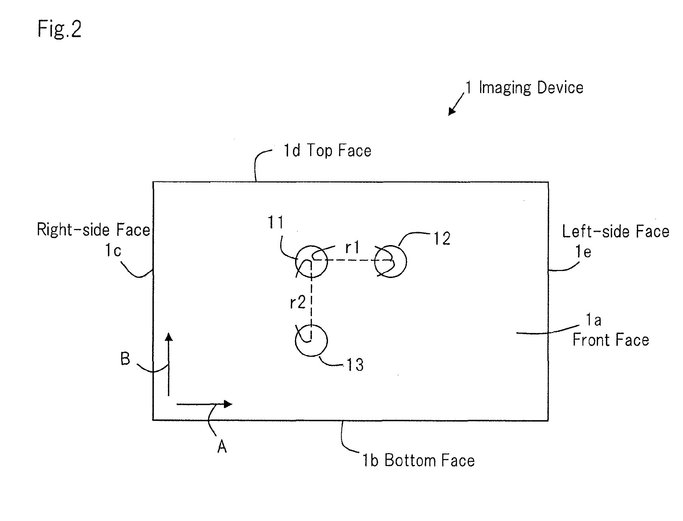

FIG. 1 is a block diagram showing imaging device 1 of one exemplary embodiment of the present invention. FIG. 2 is a front view of imaging device 1.

Imaging device 1 is a mobile phone or a smart phone, for instance. However, imaging device 1 should not be limited to a mobile phone or a smart phone. For example, imaging device 1 may be a portable game device, tablet PC (Personal Computer), notebook PC, PHS (Personal Handyphone System), PDA (Personal Data Assistance, Personal Digital Assistants: personal mobile data communication device), tablet, or 3D imaging device.

Imaging device 1 includes cameras 11, 12 and 13, tilt sensor 14, and control unit 15.

Camera 11 may be generally called first imaging means. Camera 11 is disposed on front face 1a of imaging device 1 and generates taken image data 111 when a subject 2 is shot.

Camera 12 may be generally called second imaging means. Camera 12 is disposed on front face 1a of imaging device 1 and generates taken image data 121 when a subject 2 is shot.

Camera 12 is disposed at a position that is horizontally shifted from camera 11. In the present exemplary embodiment, in the standard state, camera 12 is arranged at a position that is shifted from camera 11 by a distance r1 in the horizontal direction, and aligned with camera 11 in the vertical direction. In the present exemplary embodiment, in the standard state, lateral direction A of imaging device 1 is set horizontal while longitudinal direction B of imaging device 1 is set vertical. Here, distance r1 is a value greater than 0.

Camera 13 can be generally called third imaging means. Camera 13 is disposed on front face 1a of imaging device 1 and generates taken image data 131 when a subject 2 is shot.

Camera 13 is disposed at a position that is vertically shifted from camera 11. In the present exemplary embodiment, in the standard state, camera 13 is arranged at a position that is shifted from camera 11 by a distance r2 in the vertical direction, and aligned with camera 11 in the horizontal direction. Here, distance r2 is a value greater than 0. Further, distance r2 may be greater than, smaller than, or equal to, distance r1.

Tilt sensor 14 may be generally called detecting means.

Tilt sensor 14 detects the tilt of imaging device 1. Tilt sensor 14 includes, for example a gravity sensor, and detects the tilt of imaging device 1 relative to the orientation of the gravity, for example, detects if the gravity is oriented to bottom face 1 (see FIG. 2), to right-side face 1c, top face 1d, or left-side face 1e.

In the present exemplary embodiment, the tilt of imaging device 1 when imaging device 1 is set in the standard state, is defined to be 0 degrees, and the rotational angle, by which imaging device 1 is rotated counterclockwise about the normal to front face 1a from the standard state, is defined as the tilt of imaging device 1.

In the present exemplary embodiment, tilt sensor 14 determines that the direction of gravity is oriented toward bottom face 1b when the tilt of imaging device 1 falls in ranges from 0 degrees to less than 45 degrees or from 315 degrees to 360 degrees. Further, tilt sensor 14 determines that the direction of gravity is oriented toward right side face 1 c when the tilt of imaging device 1 falls in ranges from 45 degrees to less than 135 degrees. Tilt sensor 14 determines that the direction of gravity is oriented toward top face 1d when the tilt of imaging device 1 falls in ranges from 135 degrees to less than 225 degrees. Moreover, tilt sensor 14 determines that the direction of gravity is oriented toward left side face 1e when the tilt of imaging device 1 falls in ranges from 225 degrees to less than 315 degrees.

Control unit 15 can be generally called control means.

Control unit 15, based on the result of detection of tilt sensor 14, selects two cameras, which are horizontally apart under the situation in which the tilt of imaging device 1 has been detected, from among cameras 11 to 13, as a pair of imaging execution cameras to produce stereoscopic image data. Here, the imaging execution cameras can be generally called imaging execution means.

In the present exemplary embodiment, based on the detection result of tilt sensor 14, control unit 15 selects as a pair of imaging execution cameras, either cameras 11 and 12 or cameras 11 and 13, which are located horizontally apart from each other in the state in which the tilt of imaging device 1 has been detected.

For example, when the detection result of tilt sensor 14 shows that the tilt of imaging device 1 is 0 degrees, control unit 15 selects cameras 11 and 12 as a pair of imaging execution cameras. When the detection result of tilt sensor 14 shows that the tilt of imaging device 1 is 90 degrees, control unit 15 selects cameras 11 and 13 as a pair of imaging execution cameras.

Control unit 15 produces stereoscopic image data from the captured image data (which will be referred to hereinbelow as "selected image data") generated by each of the paired imaging execution cameras.

Based on the result of detection from tilt sensor 14, control unit 15 determines the selected image data for the right-eye image data from the paired selected image data, and determines the selected image data for the left-eye image data from the paired selected image data.

Control unit 15 includes storage unit 15a and processing unit 15b.

Storage unit 15a stores the selected image data, the stereoscopic image data, the determining information that shows the relationship between, the tilt of imaging device 1, imaging execution cameras, right-eye image data and left-eye image data.

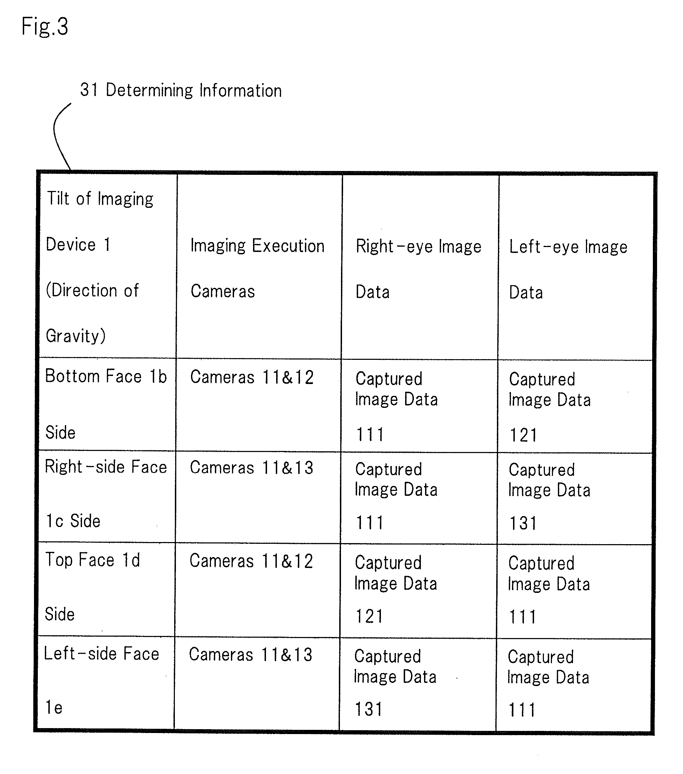

FIG. 3 is a diagram showing one example of determining information.

In FIG. 3, determining information 31 shows that, in a state where imaging device 1 is tilted so that the direction of gravity is oriented to the bottom face 1b side, cameras 11 and 12 are selected as the imaging execution cameras, captured image data 111 is used as the right-eye image data and taken image data 121 is used the left-eye image data. In this case, captured image data 111 and 121 are the selected image data, and camera 11 serves as the right-eye camera and camera 12 serves as the left-eye camera.

Determining information 31 shows that, in a state where imaging device 1 is tilted so that the direction of gravity is oriented to the right-side face 1c side, cameras 11 and 13 are selected as the imaging execution cameras, captured image data 111 is used as the right-eye image data and captured image data 131 is used the left-eye image data. In this case, captured image data 111 and 131 are the selected image data, and camera 11 serves as the right-eye camera and camera 13 serves as the left-eye camera.

Determining information 31 shows that, in a state where imaging device 1 is tilted so that the direction of gravity is oriented to the top face 1d side, cameras 11 and 12 are selected as the imaging execution cameras, taken image data 121 is used as the right-eye image data and captured image data 111 is used the left-eye image data. In this case, captured image data 111 and 121 are the selected image data, and camera 12 serves as the right-eye camera and camera 11 serves as the left-eye camera.

Determining information 31 shows that, in a state where imaging device 1 is tilted so that the direction of gravity is oriented to the left-side face 1e side, cameras 11 and 13 are selected as the imaging execution cameras, captured image data 131 is used as the right-eye image data and captured image data 111 is used the left-eye image data. In this case, captured image data 111 and 131 are the selected image data, and camera 13 serves as the right-eye camera and camera 11 serves as the left-eye camera.

Processing unit 15b controls imaging device 1. For example, processing unit 15b determines the imaging execution cameras, right-eye image data and left-eye image data, by using the detection result of tilt sensor 14 and determining information 31 in storage unit 15a.

Next, the operation will be described.

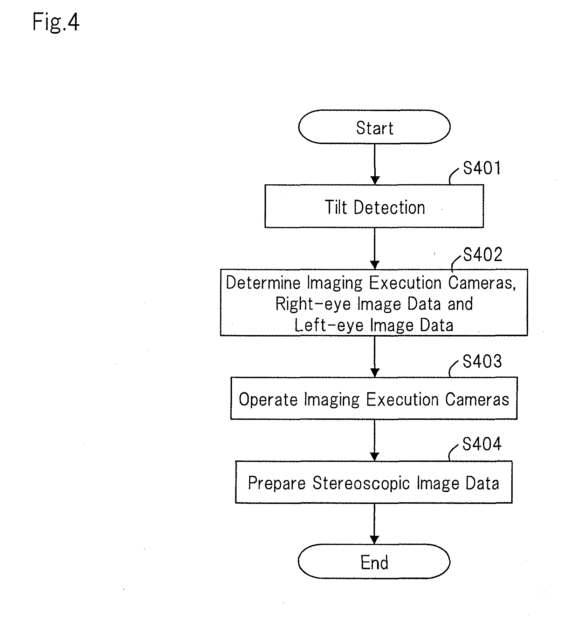

FIG. 4 is a flow chart for illustrating the operation of imaging device 1.

When receiving user's start instructions via a control switch (not shown), processing unit 15b activates tilt sensor 14 to detect the tilt of imaging device 1 (Step S401).

Then, processing unit 15b, as receiving the result of detection from tilt sensor 14, refers to determining information 31 in storage unit 15a and determines two imaging execution cameras, right-eye image data and left-eye image data, in accordance with the detection result of tilt sensor 14 (Step S402).

When, for example the detection result of tilt sensor 14 shows a condition where imaging device 1 is tilted so that the direction of gravity is oriented to the bottom face 1b side (as an example, the tilt of imaging device 1 is 0 degrees), processing unit 15b selects cameras 11 and 12 as the imaging execution cameras, and determines to use captured image data 111 for the right-eye image data and captured image data 121 for the left-eye image data.

Subsequently, processing unit 15b operates the two imaging execution cameras that have been determined at Step S402 (Step S403) to shoot subject 2.

Then, processing unit 15b creates stereoscopic image data based on the right-eye image data and left-eye image data from the two imaging execution cameras (Step S404).

For example, processing unit 15b generates stereoscopic image data by combining the right-eye image data and left-eye image data into a 3D image file format, as an example, CIPA (Camera & Imaging Products Association) multi picture format.

When a 3D still image is taken, processing unit 15b terminates still-image shooting as Step S404 is ended.

In a situation in which a 3D movie is taken, the operation returns to Step S401 when Step S404 is ended. Therefore, if the orientation (tilt) of imaging device 1 changes during 3D moving shooting, the imaging execution cameras will be switched in order to continue the 3D moving shooting. Processing unit 15b, upon receipt of ending instructions from the user, via a control switch (not shown), terminates the shooting of 3D movie.

Next, the effect of the present exemplary embodiment will be described.

According to the present exemplary embodiment, tilt sensor 14 detects the tilt of imaging device 1. Control unit 15, based on the detection result of tilt sensor 14, selects from cameras 11 to 13, two cameras that are horizontally apart from each other when tilt sensor 14 has detected the tilt.

Accordingly, if imaging device 1 is inclined, it is possible to select two cameras that have a horizontal separation corresponding to a parallax. Thus, it is possible to perform good 3D imaging regardless of the orientation of imaging device 1.

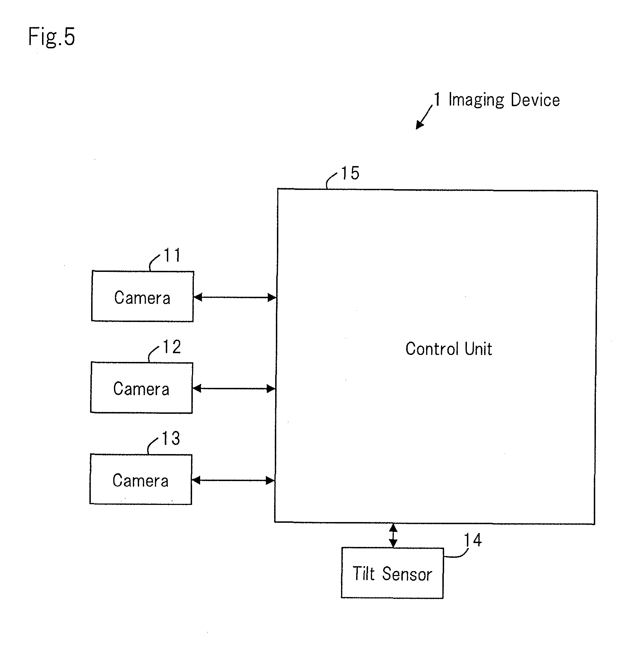

For this reason, in a situation in which imaging device 1 is, for example, a mobile phone, it is possible to perform 3D imaging not only when the mobile phone displays a long image but also when the mobile phone displays a wide image. It should be noted that this effect also contributes to an imaging device that consists of camera 11, camera 12, camera 13, tilt sensor 14 and control unit 15. FIG. 5 is a block diagram showing an imaging device made up of camera 11, camera 12, camera 13, tilt sensor 14 and control unit 15.

In the present exemplary embodiment, camera 12 is arranged at a position that is horizontally shifted from camera 11 while camera 13 is arranged at a position that is vertically shifted from camera 11. Control unit 15, based on the detection result of tilt sensor 14, selects either cameras 11 and 12 or cameras 11 and 13, which are horizontally shifted from each other in the situation where the tilt of imaging device 1 has been detected.

In this case, it is possible in a state in which three cameras are used, to select two cameras having a horizontal separation for a parallax even if imaging device 1 is tilted.

In the present exemplary embodiment, control unit 15 also creates stereoscopic image data, based on the captured images of data respectively generated by the two selected cameras (imaging execution cameras).

In this case, it is possible to create stereoscopic image data regardless of the direction of imaging device 1.

Here, in the present exemplary embodiment, if the captured image data generated by the two selected cameras (imaging execution cameras) are different in quality, control unit 15b may reduce variation in the quality of the captured image data.

For example, if two imaging execution cameras have different specifications, the quality (e.g., image brightness, the number of pixels, the area of the captured range) of the captured image data generated by each imaging execution camera may be different from that of the other.

For this reason, processing unit 15b, for example, modifies the captured image data so that the brightness of the image specified by the captured image data generated by each imaging execution camera coincides with or becomes close to that of the other.

Alternatively, processing unit 15b, for example, modifies the captured image data so that the number of pixels of the captured image data that is generated by each imaging execution camera coincides with or becomes close to that of the other.

Moreover, processing unit 15b, for example, modifies the captured image data so that the area of the captured range specified by the taken image data that is generated by each imaging execution camera coincides with or becomes close to that of the other.

In the above case, it is possible to improve the quality of the stereoscopic image data.

Although, in the above exemplary embodiment, tilt sensor 14 uses a gravity sensor to detect the tilt of imaging device 1, tilt sensor 14 may use an acceleration sensor or a gyro sensor instead of the gravity sensor and detect the tilt of imaging device 1 using the acceleration sensor or gyro sensor.

Further, in the above exemplary embodiment, three cameras 11 to 13 are used as the imaging means, but the number of imaging means may be three or more.

For example, a camera, which is arranged on front face 1a of imaging device 1 (which will be referred to hereinbelow as "extra camera") for generating captured image data 611 when subject 2 is taken, may be added as fourth imaging means.

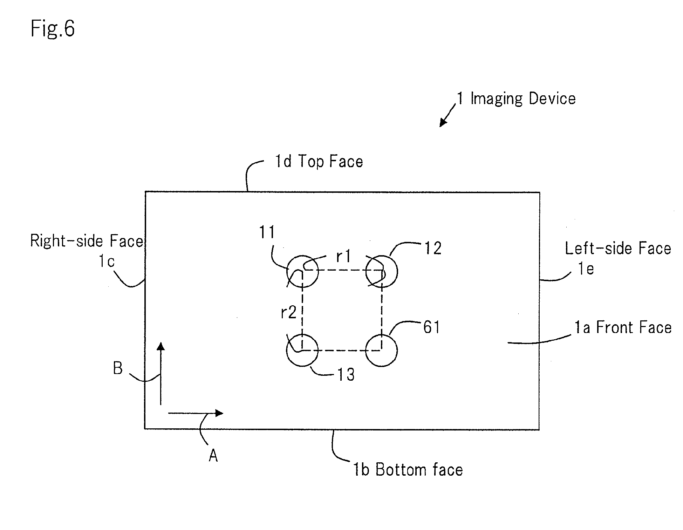

FIG. 6 is a front view of imaging device 1 having extra camera 61 added.

In FIG. 6, extra camera 61 is disposed at a position that is horizontally and vertically shifted from camera 11. In the present exemplary embodiment, extra camera 61 is arranged at a position that is displaced by a distance r1 horizontally, and by a distance r2 vertically, from camera 11, in the standard state.

Here, when extra camera 61 exists, storage unit 15a stores determining information 71 instead of determining information 31. Processing unit 15b determines the imaging execution cameras, the right-eye image data and the left-eye image data, based on the detection result of tilt sensor 14 and determining information 71 in storage unit 15a.

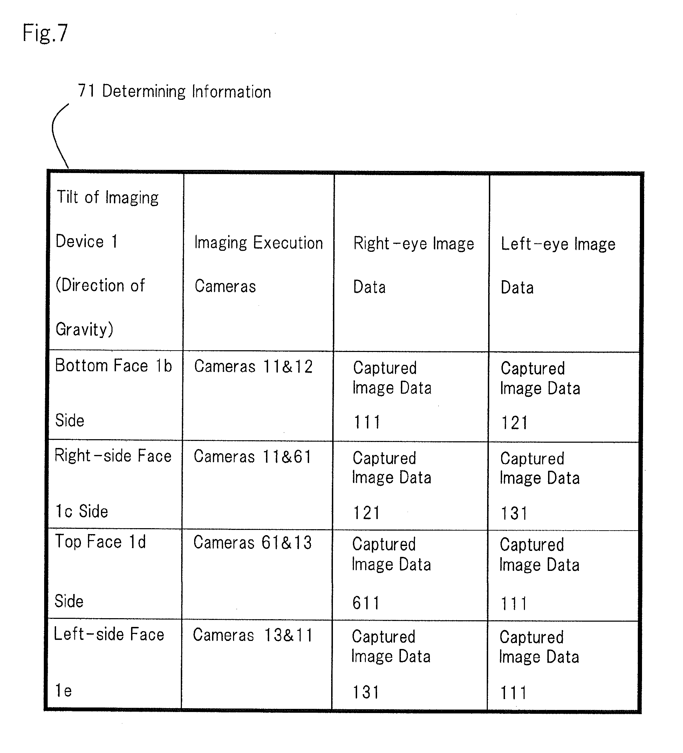

FIG. 7 is a diagram showing one example of determining information 71.

In FIG. 7, determining information 71 shows that, in a state where imaging device 1 is tilted so that the direction of gravity is oriented to the bottom face 1b side, cameras 11 and 12 are selected as the imaging execution cameras, captured image data 111 is used as the right-eye image data and captured image data 121 is used the left-eye image data. In this case, captured image data 111 and 121 are the selected image data, and camera 11 serves as the right-eye camera and camera 12 serves as the left-eye camera.

Determining information 71 shows that, in a state where imaging device 1 is tilted so that the direction of gravity is oriented to the right-side face 1c side, cameras 12 and 61 are selected as the imaging execution cameras, captured image data 121 is used as the right-eye image data and captured image data 611 is used the left-eye image data. In this case, captured image data 121 and 611 are the selected image data, and camera 12 serves as the right-eye camera and camera 61 serves as the left-eye camera.

Determining information 71 shows that, in a state where imaging device 1 is tilted so that the direction of gravity is oriented to the top face 1d side, cameras 61 and 13 are selected as the imaging execution cameras, captured image data 611 is used as the right-eye image data and captured image data 131 is used the left-eye image data. In this case, captured image data 611 and 131 are the selected image data, and camera 61 serves as the right-eye camera and camera 13 serves as the left-eye camera.

Determining information 71 shows that, in a state where imaging device 1 is tilted so that the direction of gravity is oriented to the left-side face 1e side, cameras 13 and 11 are selected as the imaging execution cameras, captured image data 131 is used as the right-eye image data and captured image data 111 is used the left-eye image data. In this case, captured image data 131 and 111 are the selected image data, and camera 13 serves as the right-eye camera and camera 11 serves as the left-eye camera.

Upon receiving the detection result of tilt sensor 14, processing unit 15b refers to determining information 71 in storage unit 15a and determines two imaging execution cameras, right-eye image data and left-eye image data, in accordance with the detection result of tilt sensor 14.

When, for example the detection result of tilt sensor 14 shows a case where imaging device 1 is tilted so that the direction of gravity is oriented to the right-side face 1c side (as an example, the tilt of imaging device 1 is 90 degrees), processing unit 15b selects cameras 12 and 61 as the imaging execution cameras, and determines to use captured image data 121 for the right-eye image data and captured image data 611 for the left-eye image data.

Thereafter, processing unit 15b operates the two imaging execution cameras to create stereoscopic image data based on the right-eye image data and left-eye image data from the two imaging execution cameras.

In this case, processing unit 15b, based on the detection result of tilt sensor 14, selects cameras 11 and 12, or cameras 12 and 13, or cameras 14 and 61 or cameras 61 and 11, which are horizontally shifted from each other in a state in which the tilt has been detected by tilt sensor 14. Accordingly, it is possible in a case where four cameras are used to select two cameras having a horizontal separation for a parallax even if imaging device 1 is tilted. Further, of the four cameras, two cameras which are located on the upper side at the time of shooting, can be used as the imaging execution cameras.

Moreover, imaging device 1 may be realized by a computer having three or more cameras connected thereto. In this case, the computer loads and executes programs recorded on a recording medium such as CD-ROM (Compact Disc Read Only Memory) readable by the computer, to function as tilt sensor 14 and control unit 15. The recording medium is not limited to CD-ROM but can be changed as appropriate.

Although the present invention has been explained with reference to the exemplary embodiment, the present invention should not be limited to the above exemplary embodiment. Various modifications that can be understood by those skilled in the art may be made to the structures and details of the present invention within the scope of the present invention.

This application claims priority based on Japanese Patent Application No. 2011-119200, filed on May 27, 2011, and should incorporate all the disclosure thereof herein.

### Description of Reference Numerals

- 1: imaging device
- 11-13, 61: camera
- 14: tilt sensor
- 15: control unit
- 15a: storage unit
- 15b: processing unit

## Claims

1. An imaging device comprising:
three or more imaging means;
detecting means that detects a tilt of the imaging device; and,
control means that selects, based on a detection result of the detecting means, two imaging means, which are horizontally shifted from each other in a situation in which the detecting means has detected the tilt, from among the three or more imaging means.

2. The imaging device according to Claim 1, wherein
the three or more imaging means are three imaging means including first imaging means, second imaging means that is disposed at a position that is horizontally shifted from the first imaging means and third imaging means that is disposed at a position that is vertically shifted from the first imaging means, and,
the control means, based on the detection result of the detecting means, selects either the first imaging means and second imaging means, or the first imaging means and third imaging means, which are horizontally shifted from each other in the situation in which the detecting means has detected the tilt.

3. The imaging device according to Claim 1, wherein
the three or more imaging means are four imaging means including first imaging means, second imaging means that is disposed at a position that is horizontally shifted from the first imaging means, third imaging means that is disposed at a position that is vertically shifted from the first imaging means and fourth imaging means that is disposed at a position that is vertically and horizontally shifted from the first imaging means, and,
the control means, based on the detection result of the detecting means, selects the first imaging means and second imaging means, or the second imaging means and third imaging means, or the third imaging means and fourth imaging means, or the fourth imaging means and first imaging means, which are horizontally shifted from each other in the situation where the detecting means has detected the tilt.

4. The imaging device according to any one of Claims 1 to 3, wherein the control means generates stereoscopic image data based on captured image data respectively generated by the two imaging means that are selected.

5. The imaging device according to any one of Claims 1 to 4, wherein, when the captured image data generated by the two imaging means that are selected are different in quality, the control means reduces the difference in quality between the captured image data.

6. An imaging selection method used in an imaging device including three or more imaging means, comprising:
detecting a tilt of the imaging device; and,
selecting, based on the tilt of the imaging device, two imaging means, which are horizontally shifted from each other in a situation in which the tilt has been detected, from among the three or more imaging means.

7. A computer-readable recording medium storing a program that causes a computer connected to three or more imaging means to execute:
a detecting procedure for detecting a tilt of the imaging device; and,
a control procedure for selecting, based on the tilt of the imaging device, two imaging means, which are horizontally shifted from each other in a situation in which the tilt has been detected, from among the three or more imaging means.
